# EUROPÄISCHE PATENTSCHRIFT

(11) **EP 2 803 510 B1**
(45) Veröffentlichungstag und Bekanntmachung des Hinweises auf die Patenterteilung: **27.06.2018**
(21) Anmeldenummer: 14001591.8
(22) Anmeldetag: 06.05.2014
(51) Int. Cl.: B60D 1/48

(54) **Trägeranordnung für eine Anhängekupplung oder einen Lastenträger mit einer Steckverbindung**
Support assembly for a trailer coupling or a load bearing device with a connector
Agencement de support pour un attelage ou un support de charge doté d'un connecteur à fiches

(30) Priorität: 08.05.2013 DE 102013008334
(43) Veröffentlichungstag der Anmeldung: 19.11.2014
(60) Teilanmeldung: 18169726.9
(73) Patentinhaber: WESTFALIA - Automotive GmbH, 33378 Rheda-Wiedenbrück (DE)
(72) Erfinder: Angermann, Kay, D-04720 Döbeln (DE)
(74) Vertreter: Patentanwälte Bregenzer und Reule Partnerschaftsgesellschaft mbB

(56) Entgegenhaltungen:
- US-A1- 2004 021 295
- US-A1- 2007 063 482
- US-A1- 2011 109 063
- US-B1- 6 348 112

## Beschreibung

Die Erfindung betrifft eine Trägeranordnung für eine Anhängekupplung oder einen Lastenträger gemäß dem Oberbegriff des Anspruches 1.

Eine derartige Trägeranordnung ist beispielsweise in US 2011/0109063 A1 erläutert.

Eine Trägeranordnung besteht in der Regel aus mehreren Komponenten oder Bauteilen, die miteinander verbunden werden müssen. Es ist beispielsweise bekannt, Komponenten einer Trägeranordnung miteinander zu verschweißen. Eine solche Schweißverbindung ist jedoch mechanisch stark belastet.

Es ist daher die Aufgabe der vorliegenden Erfindung, eine verbesserte Verbindung zwischen Bauteilen einer Trägeranordnung bereitzustellen.

Zur Lösung der Aufgabe ist ein Trägeranordnung gemäß der technischen Lehre des Anspruchs 1 vorgesehen.

Es ist ein Grundgedanke der vorliegenden Erfindung, dass zum einen eine formschlüssige Verbindung zwischen den miteinander zu verbindenden Bauteilen der Trägeranordnung geschaffen wird, indem der Steckvorsprung in die Steckaufnahme eingreift, und zusätzlich noch eine stoffschlüssige Verbindung geschaffen wird. Beispielsweise ist der Steckvorsprung zusätzlich geklebt, geschweißt oder dergleichen. Auch eine Lötverbindung, insbesondere eine Hartlötverbindung, ist ohne weiteres vorteilhaft. Bei den Schweißverbindungen ist es beispielsweise möglich, dass der Steckvorsprung mittels eines Widerstandsschweißens, z.B. Punktschweißens, mit dem anderen Bauteil verbunden ist. Aber auch eine Verschweißung mit Schweißzusatzwerkstoffen, z.B. Material eines Schweißdrahts, ist vorteilhaft.

Der mindestens eine Steckvorsprung ist beispielsweise an dem Querträger angeordnet und dient zur Verbindung des Seitenträgers mit dem Querträger. Ein anderer Aspekt kann vorsehen, dass die Halterung für die Anhängekupplung oder den Lastenträger anhand der erfindungsgemäßen Steckverbindung, die eine zusätzliche stoffschlüssige Verbindung vorsieht, verbunden ist.

Es können also beispielsweise die Seitenträger mit dem Querträger erfindungsgemäß verbunden sein. Es ist aber auch möglich, dass beispielsweise der Querträger oder die Seitenträger mehrteilig sind, also Bauteilkomponenten, zum Beispiel Profilkörperabschnitte, aufweisen, die auf die erfindungsgemäße Weise miteinander verbunden werden. In der nachfolgenden Beschreibung wird zwar das Wort "Bauteil" verwendet, wobei die Erläuterungen sinngemäß aber auch für die Verbindung zwischen Bauteilkomponenten gelten.

Der Steckvorsprung kann beispielsweise plattenartig sein. Es ist aber auch möglich, dass der Steckvorsprung stabförmig ist.

Selbstverständlich kann bei einer erfindungsgemäßen Anordnung beides vorgesehen sein, nämlich eine Steckverbindung, die nicht zusätzlich stoffschlüssig gesichert ist, und eine Steckverbindung, die stoffschlüssig gesichert ist. Es können mehrere erfindungsgemäße Steckverbindungen oder auch mehrere nicht erfindungsgemäße Steckverbindungen vorgesehen sein. Weiterhin ist es möglich, dass auf die erfindungsgemäße Weise Komponenten eines Bauteils, beispielsweise Abschnitte eines Querträgers, miteinander verbunden sind.

Der mindestens eine Steckvorsprung greift zweckmäßigerweise in die Steckaufnahme des zweiten Bauteils formschlüssig ein. Es ist aber auch möglich, dass der Steckvorsprung nur an einzelnen Bereichen der Steckaufnahme formschlüssig anliegt, während an anderen Bereichen ein Abstand zwischen dem Steckvorsprung und der Steckaufnahme bzw. den Innenwänden der Steckaufnahme, vorgesehen ist.

Die Steckaufnahme umfasst zweckmäßigerweise eine Durchstecköffnung. Es ist aber auch möglich, dass die Steckaufnahme einen Boden aufweist, das heißt sozusagen ein Blindloch oder Sackloch ist.

Der mindestens eine Steckvorsprung ist von einer Einsteckseite her in die Steckaufnahme eingesteckt. Der Steckvorsprung steht hinter die, der Einsteckseite entgegengesetzten freien Seite oder Oberfläche der freien Seite zurück, ist sozusagen unterbündig. In der Steckaufnahme bleibt dann eine Vertiefung zurück. Diese Vertiefung dient zur Aufnahme von Verbindungsmaterial, mit dem der mindestens eine Steckvorsprung mit der Steckaufnahme stoffschlüssig verbunden ist. Mithin ist also die Vertiefung zumindest teilweise mit dem Verbindungsmaterial, beispielsweise einem Schweißmaterial, Lot, Klebstoff oder dergleichen sozusagen verfüllt. Dadurch wird eine sehr günstige, Platz sparende Konstruktion geschaffen.

Ein vor die Steckaufnahme vorstehender Abschnitt des mindestens einen Steckvorsprungs ist zweckmäßigerweise in der Art einer Biegelasche quer zur Längserstreckungsrichtung oder Steckachse der Steckaufnahme umgebogen oder umgefalzt. Der umgebogene Abschnitt ist zweckmäßigerweise an der der Einsteckseite entgegengesetzten Seite des Bauteils angeordnet. Aber auch von der Einsteckseite her gesehen ist es möglich, dass der Steckvorsprung umgekantet oder umgefalzt wird. In jedem Fall ist dadurch eine besonders günstige formschlüssige Verbindung möglich.

Ein außerhalb der Steckaufnahme befindlicher Abschnitt des Steckvorsprungs ist mit dem anderen Bauteil zweckmäßigerweise stoffschlüssig verbunden. Beispielsweise ist der Steckvorsprung an der Einsteckseite stoffschlüssig mit dem anderen Bauteil verbunden. Aber auch an der der Einsteckseite entgegengesetzten Seite des Bauteils kann der Steckvorsprung mit diesem Bauteil stoffschlüssig, beispielsweise anhand einer Klebverbindung, Lötverbindung oder Schweißverbindung, verbunden sein.

Bevorzugt ist es, wenn der bereits erwähnte, in der Art einer Biegelasche umgebogene Abschnitt, der sich außerhalb der Steckaufnahme befindet, mit dem anderen Bauteil stoffschlüssig verbunden ist. Dort kann aber auch eine Verbindung mittels einer Schraube, eines Niets oder dergleichen vorgesehen sein.

Zweckmäßig ist es, wenn der mindestens eine Steckvorsprung an mindestens einer Innenfläche der Steckaufnahme, vorzugsweise an sämtlichen Innenflächen der Steckaufnahme, anliegt, beispielsweise flächig anliegt. Es ist aber auch möglich, dass der Steckvorsprung dort nur punktuell oder streifenförmig anliegt, was eine stoffschlüssige Verbindung mit beispielsweise Klebstoff oder Lot erleichtern kann. In den Zwischenräumen zwischen den Anlage-Vorsprüngen oder Anlage-Streifen des Steckvorsprungs kann das Bindematerial, zum Beispiel Klebstoff, Lot oder dergleichen, Platz finden.

Das Bauteil, das den mindestens einen Steckvorsprung aufweist, umfasst einen Grundkörper, mit dem der mindestens eine Steckvorsprung integral und einstückig ist. Beispielsweise ist der Steckvorsprung aus dem Grundkörper oder einem den Grundkörper bildenden Basiskörper, zum Beispiel einem Profilkörper, ausgeschnitten oder ausgestaltet.

Bevorzugt ist es, wenn sich das den mindestens einen Steckvorsprung aufweisende Bauteil mit einer sich neben dem Steckvorsprung erstreckenden Fläche, beispielsweise einer Stirnwand oder Stirnfläche, an dem anderen Bauteil abstützt. Beispielsweise liegt diese Fläche flächig an dem anderen Bauteil an. Dort kann eine weitere, stoffschlüssige Verbindung vorgesehen sein.

Mindestens eines der Bauteile umfasst zweckmäßigerweise einen Profilkörper, beispielsweise mit einem polygonalen, z.B. rechteckigen, oder runden Querschnitt.

Der mindestens eine Steckvorsprung ist zweckmäßigerweise mit einer Umfangswand des Profilkörpers integral und erstreckt sich in dessen Längserstreckungsrichtung. Beispielsweise steht der mindestens eine Steckvorsprung in der Längserstreckungsrichtung des Profilkörpers von demselben ab. Beispielsweise sind an einer Stirnseite des Profilkörpers, insbesondere dessen Umfangswand, einer oder mehrere Steckvorsprünge vorgesehen.

Mithin bildet also der Steckvorsprung zweckmäßigerweise einen Bestandteil einer Gruppe von Steckvorsprüngen, die vor eine Stirnseite des einen Bauteils vorsteht und in Steckaufnahmen des anderen Bauteils eingreift.

Auf die erfindungsgemäße Weise können auch zusätzliche Verbindungskörper die miteinander zu verbindenden Bauteile verbinden. Beispielsweise weist die Trägeranordnung einen die miteinander verbundenen, insbesondere sich in einem Eckbereich zwischen den Bauteilen erstreckenden, Verbindungskörper auf, an dem die Steckaufnahme oder der Steckvorsprung angeordnet ist. Beispielsweise kann der Verbindungskörper in der Art einer Querstrebe oder Diagonalstrebe ausgestaltet sein und an seinen freien Seiten, mit denen er die beiden Bauteile miteinander verbindet, Steckvorsprünge aufweisen, die in entsprechende Steckaufnahmen an den miteinander zu verbindenden Bauteilen eingreifen. Der Verbindungskörper kann plattenartig sein und/oder ein Profil umfassen.

Das eine Bauteil, beispielsweise die Halterung für eine Anhängekupplung oder das Kupplungsteil des Lastenträgers, ist zweckmäßigerweise durch eine Durchstecköffnung an einer ersten Wand des anderen Bauteils durchgesteckt und anhand des mindestens einen Steckvorsprungs und der Steckaufnahme mit einer der ersten Wand gegenüberliegenden Wand des anderen Bauteils verbunden. Beispielsweise umfasst das andere Bauteil einen Profilkörper, insbesondere einen Hohlkörper, mit den beiden Wänden, von denen eine Wand von dem Bauteil, beispielsweise einer Steckaufnahme oder Steckhülse für einen Kupplungsarm, durchdrungen ist. An der anderen Wand ist das durchgesteckte Bauteil anhand von mindestens einer erfindungsgemäßen Steckverbindung festgelegt, beispielsweise verschweißt oder verklebt oder beides.

Zweckmäßig ist es, wenn das eine Bauteil formschlüssig in der Durchstecköffnung des anderen Bauteils aufgenommen ist. Es kann aber auch ein Freiraum zwischen dem durchgesteckten Bauteil und dem dieses aufnehmenden Bauteil vorgesehen sein. Beispielsweise kann zwischen einem Innenumfang der Durchstecköffnung und einem Außenumfang des anderen Bauteils, beispielsweise der Steckhülse, ein Zwischenraum vorgesehen sein.

Eine vorteilhafte Ausführungsform sieht vor, dass der mindestens eine Steckvorsprung in der Steckaufnahme umgeformt wird, beispielsweise gestaucht oder geprägt.

Bei dieser Variante der Erfindung, die an sich dem Anspruch 1 entspricht, jedoch nicht zwingend eine stoffschlüssige Verbindung vorsehen muss, handelt es sich im Prinzip um eine eigenständige Erfindung. Mithin wäre also an sich eine Trägeranordnung möglich, die den Merkmalen des Anspruches 19 entspricht, wobei die stoffschlüssige Verbindung hier nur eine Option darstellt und nicht vorhanden sein muss.

Bevorzugt ist es, wenn der Steckvorsprung, wenn er nun in die Steckaufnahme eingesteckt ist, in seinem Querschnitt durch diese Umformung vergrößert wird, beispielsweise indem er gestaucht wird.

Durch die Umformung ist es auch möglich, dass der Steckvorsprung an eine schräg oder winkelig verlaufende Steckaufnahme sozusagen angepasst wird.

Eine besonders vorteilhafte Maßnahme sieht dabei vor, dass die Steckaufnahme an der Einsteckseite einen kleineren Querschnitt aufweist als davon entfernt. Beispielsweise weitet sich die Steckaufnahme von der Einsteckseite, von der her der Steckvorsprung in die Steckaufnahme eingesteckt wird, zur freien Seite, wo der Steckvorsprung eventuell sogar noch außen vor das andere Bauteil oder die andere Bauteilkomponente vorsteht, auf. Bevorzugt ist ein konischer Verlauf. Wenn nunmehr der Steckvorsprung in dieser sich zur freien Seite hin aufweitenden Steckaufnahme gestaucht oder anderweitig umgeformt wird, nimmt sein Querschnitt zu, so dass er besonders günstig formschlüssig in der Steckaufnahme gehalten wird.

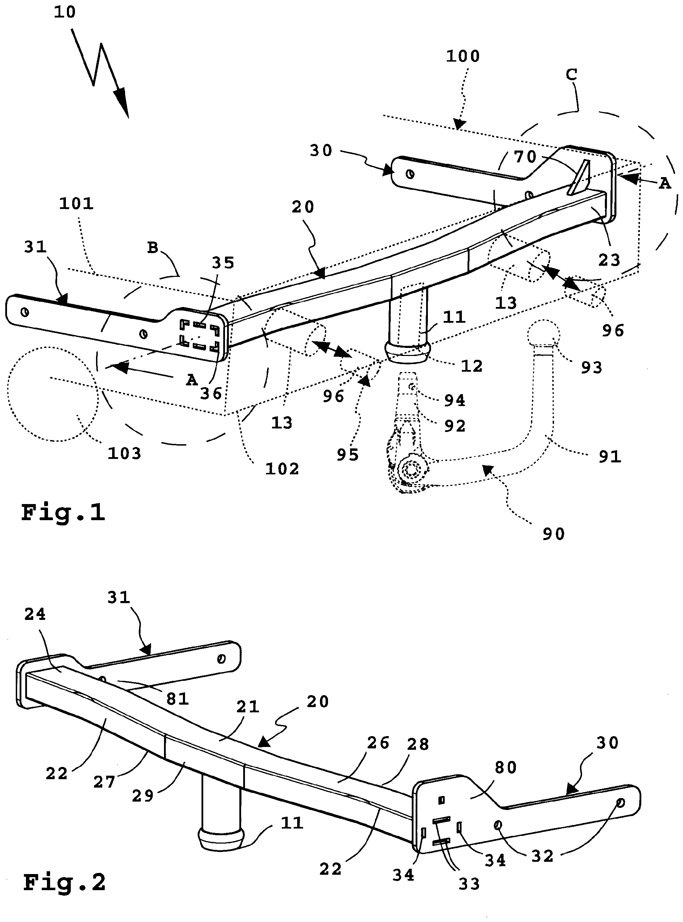

- Figur 1: eine perspektivische Schrägansicht einer ersten Trägeranordnung von in Fahrtrichtung links hinten,
- Figur 2: die Trägeranordnung gemäß Figur 1, jedoch perspektivisch von in Fahrtrichtung rechts hinten,

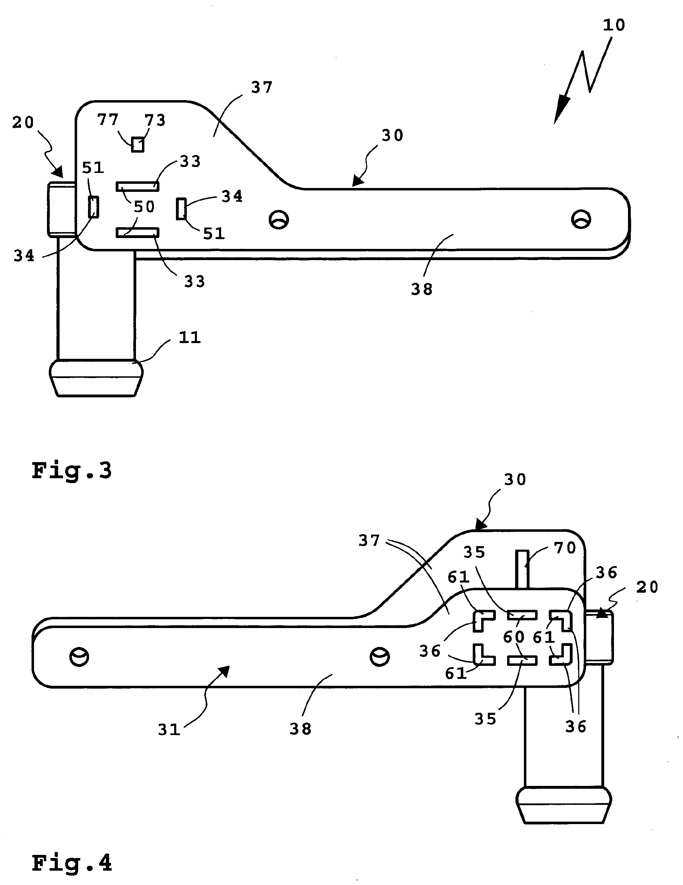

- Figur 3: eine Seitenansicht der Trägeranordnung gemäß Figuren 1 und 2 von rechts,
- Figur 4: eine Seitenansicht der Trägeranordnung gemäß Figuren 1 - 3 von links,
- Figur 5: eine hintere Frontalansicht der Trägeranordnung gemäß Figuren 1 - 3,
- Figur 6: ein Schnitt-Detail B der Trägeranordnung gemäß Figuren 1-5 etwa entlang einer Schnittlinie A-A in Figur 1,
- Figur 7: ein Schnitt-Detail C der Trägeranordnung gemäß Figuren 1-5 etwa entlang einer Schnittlinie A-A in Figur 1,

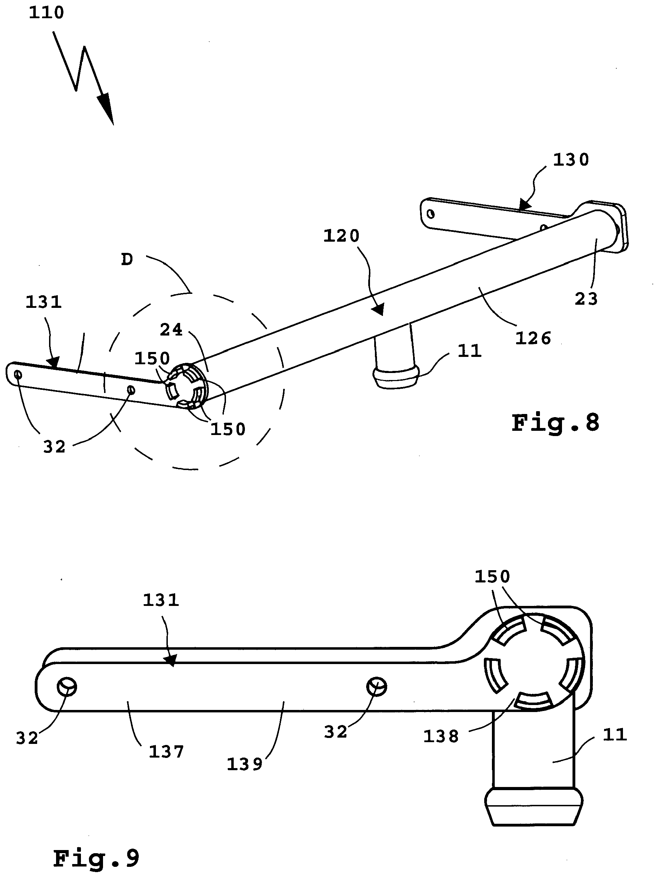

- Figur 8: eine perspektivische Schrägansicht eines zweiten Ausführungsbeispiels einer erfindungsgemäßen Trägeranordnung, die in
- Figur 9: in einer linken Seitenansicht dargestellt ist,
- Figur 10: ein linker Teil der Trägeranordnung gemäß Figur 8 von oben her gesehen,
- Figur 11: eine Schnittdarstellung eines Details D (Figur 8) entlang einer Schnittlinie E-E in Figur 10,
- Figur 12: eine Draufsicht auf eine dritte erfindungsgemäße Trägeranordnung, bei der eine Halterung für einen Kupplungsarm mit einem Querträger anhand von erfindungsgemäßen Steckverbindungen verbunden ist,
- Figur 13: eine perspektivische Schrägansicht der Halterung gemäß Figur 12, und
- Figur 14: eine Querschnittsdarstellung der Anordnung gemäß Figur 12 etwa entsprechend einem Ausschnitt F und entlang einer Schnittlinie G-G.

Trägeranordnungen 10, 110 und 210 dienen zur Befestigung einer Anhängekupplung 90 und/oder eines schematisch angedeuteten Lastenträgers 95. Die Trägeranordnungen 10, 110 und 210 sind an einer Karosserie 101 eines Kraftfahrzeugs 100 befestigbar oder befestigt, beispielsweise an dessen Heck 102. Von dem Kraftfahrzeug 100 sind exemplarisch Räder 103 dargestellt. Das Kraftfahrzeug 100 ist beispielsweise ein Personenkraftwagen, insbesondere mit einem Verbrennungsmotor und/oder einem Elektromotor. In der nachfolgenden Beschreibung sind gleiche oder ähnliche Komponenten in der Regel mit denselben Bezugsziffern versehen, teilweise zur Verdeutlichung von Unterschieden mit um jeweils 100 verschiedenen Bezugsziffern.

Die Trägeranordnungen 10, 110 und 210 sind zweckmäßigerweise hinter einem Stoßfänger des Kraftfahrzeugs 100 verborgen. Die Trägeranordnungen 10, 110 und 210 haben Querträger 20, 120 und 220, die sich entlang des Hecks 102 in Fahrzeugquerrichtung des Kraftfahrzeugs 100 erstrecken. Die Querträger 20-220 werden von Seitenträgern 30, 31 sowie Seitenträgern 130 und 131 und Seitenträgern 230, 231 gehalten, die sich jeweils in Fahrzeuglängsrichtung des Kraftfahrzeugs 100 erstrecken. Die Seitenträger 30-231 sind beispielsweise mit der Karosserie 101 verschraubt, wofür Durchtrittsöffnungen 32 an den Seitenträgern 30-231 vorgesehen sind, durch die Schrauben (nicht dargestellt) durchgesteckt und mit der Karosserie 101 verschraubbar sind.

An den Querträgern 20, 120 und 220 sind beispielsweise Halterungen 11 für die Anhängekupplung 90 angeordnet. Die Halterungen 11 umfassen beispielsweise eine Halteaufnahme 12, in die ein Steckende 92 eines Kupplungsarms 91 der Anhängekupplung 90 einsteckbar ist. Am Kupplungsarm 91 befindet sich noch ein Kuppelstück 93, zum Beispiel eine Kupplungskugel, zum Ankuppeln eines Anhängers. Anstelle der Halterungen 11 könnte auch beispielsweise eine Lagereinrichtung zum beweglichen Lagern einer Anhängekupplung, beispielsweise zum Schwenken und/oder linearen Verschieben eines Kupplungsarms, vorgesehen sein, so dass der Kupplungsarm zwischen einer nach hinten vor das Heck 102 vorstehenden Gebrauchsstellung und einer beispielsweise hinter den Stoßfänger des Kraftfahrzeugs 100 zurück geschwenkten, verborgenen Nichtgebrauchsstellung beweglich ist, beispielsweise manuell betätigbar und/oder motorisch betätigbar. Ferner eignen sich die Trägeranordnungen 10-210 auch für fest montierte Kupplungsarme.

An den Querträgern 20, 120 und 220 können auch Halterungen 13 zum Halten des Lastenträgers 95 vorgesehen sein. Die Halterungen 13 umfassen beispielsweise Steckaufnahmen, in die Steckvorsprünge 96 des Lastenträgers 95 einsteckbar sind. Der Lastenträger 95 hat beispielsweise eine nicht dargestellte Tragplattform und/oder Tragelemente zum Tragen einer Last, zum Beispiel Rinnen zum Tragen eines Fahrrads. Bei dem Lastenträger 95 kann es sich beispielsweise um einen Fahrradträger handeln.

Die Trägeranordnungen 10, 110 und 210, insbesondere die Querträger 20-220 und die Seitenträger 30, 31, 130, 131, 230, 231, bestehen zweckmäßigerweise aus Metall, insbesondere Stahl oder Aluminium. Zweckmäßigerweise sind diese Komponenten aus Blech hergestellt.

Die Querträger 20, 120 und 220 weisen beispielsweise einen mittleren Abschnitt 21, an dem die Halterung 11 angeordnet ist, sowie sich zwischen dem mittleren Abschnitt 21 und den Seitenträgern 30-231 erstreckende seitliche Abschnitte 22 auf. Die Längsenden 23 und 24 der Abschnitte 22 sind mit den Seitenträgern 30-230 bzw. 31-231 verbunden, wobei bei den einzelnen Ausführungsbeispielen teilweise an jedem Längsende 23 oder 24 unterschiedliche Verbindungstechniken erläutert sind, um im Rahmen der Erfindung liegende Möglichkeiten aufzuzeigen.

Die Seitenträger 30 und 31 sind beispielsweise plattenartig, wobei selbstverständlich auch Profile, beispielsweise Rundprofile oder Mehrkantprofile ohne weiteres möglich sind. Die Seitenträger 30 und 31 umfassen z.B. plattenartige Wände 39.

Der Querträger 20 wird von einem Profilrohr mit beispielsweise rechteckigen Querschnitt gebildet. An seinen jeweiligen Längsenden 23 und 24 sind in der Zeichnung exemplarisch unterschiedliche Steckverbindungen dargestellt, um unterschiedliche Ausführungsformen der Erfindung zu verdeutlichen. An der in Fahrtrichtung rechten Seite, das heißt beim Längsende 23, stehen von dem Querträger 20 Steckvorsprünge 50 und 51 ab.

Die Steckvorsprünge 50 sind sozusagen Verlängerungen einer oberen Wand 26 und einer unteren Wand 27 des Querträgers 20, d.h. sie sind mit der Wand 26 und 27 einstückig und in der Art von vorstehenden Nasen ausgestaltet.

Die Steckvorsprünge 51 stehen von einer in Fahrtrichtung gesehen vorderen Wand 28 und einer in Fahrtrichtung gesehen hinteren Wand 29 des Querträgers 20 ab.

Die Steckvorsprünge 50 und 51 weisen keinerlei Winkel auf, d.h. die plan und flach verlaufende Wand 26, 27, 28 und 29 setzt sich sozusagen in den Steckvorsprüngen 50 und 51 fort. Die Steckvorsprünge 50 haben allerdings eine geringere Querbreite als die Wände 26 und 27. Die Steckvorsprünge 51 haben eine geringere Höhe als die Wände 28 und 29, d.h. dass insgesamt die Steckvorsprünge 50 und 51 in der Art von Stecknasen vor die Wände 26-29 vor stehen. Zwischen den Steckvorsprüngen 50 und 51 ist jeweils ein Abstand vorhanden, der sich sozusagen über die jeweiligen Eckbereiche oder Kanten des Profils des Querträgers 20 erstreckt.

Die Steckvorsprünge 50 und 51 sind in Steckaufnahmen 33 und 34 des Seitenträgers 30 eingesteckt. Die Abstände zwischen den Steckaufnahmen 33 und 34 und deren Innenkonturen sind so bemessen, dass die Steckvorsprünge 50 und 51 formschlüssig in den Steckaufnahmen 33 und 34 aufgenommen sind. Die Steckvorsprünge 50 und 51 liegen also mit ihrem Außenumfang an einem Innenumfang der Steckaufnahmen 33 und 34 an. Die Steckaufnahmen 33 und 34 sind beispielsweise rechteckförmige Schlitze, deren Innenkontur zu der rechteckförmigen, plattenartigen Kontur der Steckvorsprünge 50 und 51 passt.

Selbstverständlich könnten an den freien Endbereichen der Steckvorsprünge 50 und 51 sowie der Steckvorsprünge 60 und 61 auch Schrägen, z.B. eine Schräge 52, vorgesehen sein, beispielsweise sogenannte Einführschrägen, damit man die Steckvorsprünge 50 und 51 leichter in die Steckaufnahmen 33 und 34 einführen kann.

Am Längsende 24 sind Steckvorsprünge 60 und 61 vorgesehen, die vor das Längsende 24 vorstehen und in Steckaufnahmen 35 und 36 des Seitenträgers 31 eingreifen.

Die Steckvorsprünge 60 erstrecken sich sozusagen in Verlängerung der oberen Wand 26 und der unteren Wand 27 zum Seitenträger 31 hin.

Die Steckvorsprünge 61 sind teilweise ebenfalls von Abschnitten der oberen Wand 26 und der unteren Wand 27 des Querträgers 20, allerdings auch der vorderen Wand 28 und der hinteren Wand 29, gebildet. Die Steckvorsprünge 60 und 61 sind nämlich quasi über Eck aus dem Profil des Querträgers 20 ausgebildet, beispielsweise ausgeschnitten oder ausgestanzt. Diese Maßnahme kann vorteilhaft dazu dienen, dass die Steckvorsprünge besonders belastbar sind und gerade in Eckbereichen oder Kantenbereichen, wo eine größere Torsionsbelastung auftreten kann, eine besonders hohe Verwindungssteifigkeit gegeben ist.

Die Steckaufnahmen 35 und 36 weisen mit den Außenkonturen der Steckvorsprünge 60 und 61 korrespondierende Innenkonturen auf. Die Steckaufnahmen 35 sind also als im Querschnitt rechteckige Längsschlitze ausgestaltet, während die Steckaufnahmen 36 eine L-förmige Innenkontur aufweisen, passend zu der ebenfalls L-förmigem Außenkontur der Steckvorsprünge 61.

Die Seitenträger 30 und 31 weisen einen Armabschnitt 38 auf, an welchem die Durchtrittsöffnungen 32 angeordnet sind und der zur seitlichen Montage an der Karosserie 101 des Kraftfahrzeugs 100 dient, sowie einen demgegenüber etwas großflächigeren Halteabschnitt 37, an welchem die Steckaufnahmen 33-36 vorgesehen sind.

Eine zusätzliche Sicherheit und Stabilität wird durch einen Verbindungskörper 70, z.B. durch ein sogenanntes Knotenblech, bereitgestellt. Der Verbindungskörper 70 weist einen plattenartigen Grundkörper 71 auf, von dem Steckvorsprünge 72 und 73 abstehen. Der Grundkörper 71 hat eine lang gestreckte Gestalt und ist an seinen Längsendbereichen abgeschrägt, so dass seine Stirnseiten 74 und 75 in einem Winkel von 90°, jedenfalls in einem Winkel passend zu einer Innenecke zwischen der oberen Wand 26 des Querträgers 20 und einer Innenseite des Seitenträgers 30, mit seinen Stirnseiten 74 und 75 an der oberen Wand 26 und der dem Querträger 20 zugewandten Innenseite der Wand 39 flächig anliegt. Der Verbindungskörper 70 hat also Gehrungsschrägen an seinen Stirnseiten 74 und 75.

Von den Stirnseiten 74 und 75 stehen die Steckvorsprünge 72 und 73 ab und greifen in Steckaufnahmen 76 und 77 an der oberen Wand 26 des Querträgers 20 bzw. der Wand 39 des Seitenträgers 30 ein.

Die jeweiligen Stirnseiten der Bauteile, vor die die Steckvorsprünge 50-51, 60-61, 72-73 vorstehen, nämlich die Stirnseiten des Querträgers 20 und des Verbindungskörpers 70, stützen sich an den jeweiligen korrespondierenden Anlageflächen neben den Steckaufnahmen 33-36, 76-77 ab. Vorzugsweise liegen die Stirnseiten an diesen Anlageflächen flächig an, was eine besonders günstige Abstützung sozusagen an der jeweiligen Einsteckseite 80 ermöglicht.

Die Steckverbindungen, die durch die in die Steckaufnahmen 33 und 34 eingesteckten Steckvorsprünge 50 und 51 sowie die in die Steckaufnahmen 35 und 36 eingesteckten Steckvorsprünge 60 und 61 und schließlich der in die Steckaufnahmen 76 und 77 eingesteckten Steckvorsprünge 72 und 73 bereitgestellt wird, wird zusätzlich durch einen Stoffschluss gesichert.

Die Steckvorsprünge 50-51, 60-61, 72-73 stehen nicht vor die Steckaufnahmen 33-36, 76-77 an der der Einsteckseite 80 entgegengesetzten freien Seite 81 vor, sind also quasi unterbündig. Von der freien Seite 81 her bleiben also in den Steckaufnahmen 33-36, 76-77 Vertiefungen 82, die sich zur stoffschlüssigen Verbindung der Steckvorsprünge 50-51, 60-61, 72-73 in den Steckaufnahmen 33-36, 76-77 günstig eignet. In den Vertiefungen 82 ist ein Verbindungsmaterial 83 aufgenommen, beispielsweise Lötmaterial oder Lot, insbesondere Hartlot, ein Schweißmaterial, das beispielsweise durch Schweißdraht gebildet ist, Klebstoff oder dergleichen. Selbstverständlich sind auch Kombinationen davon möglich.

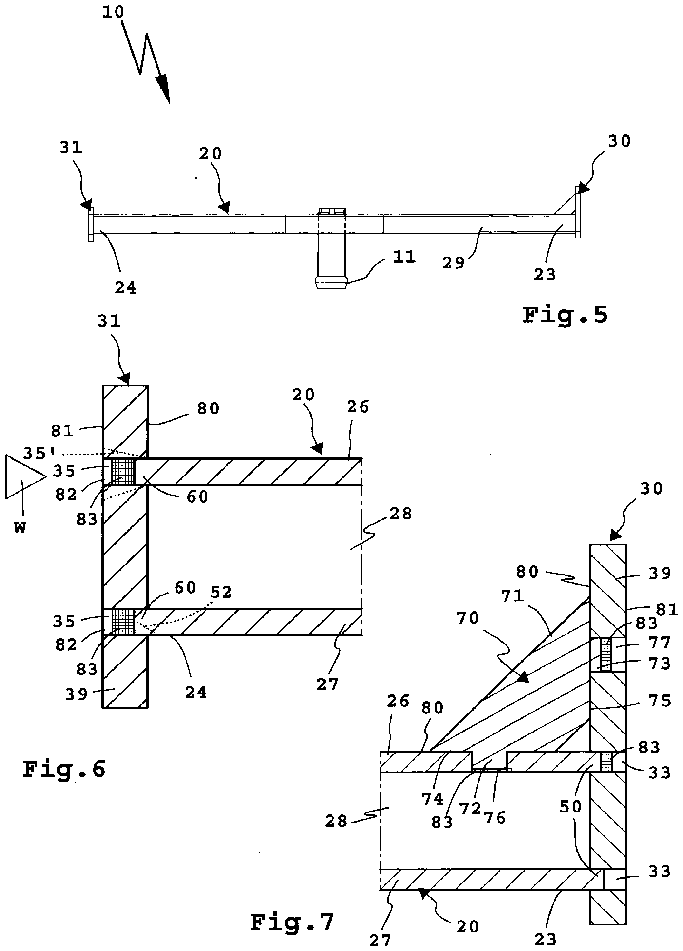

Eine weitere Variante der Erfindung, die ebenfalls vorteilhaft eine stoffschlüssige Verbindung zwischen Steckvorsprung und Steckaufnahme vorsehen kann, aber an sich nicht muss, ist in Figur 6 angedeutet. Beispielsweise wird der Steckvorsprung 60 durch ein Prägewerkzeug W, z.B. einen Keil, einen Prägestempel oder dergleichen, aufgeweitet, so dass er in der alternativ ausgestalteten Steckaufnahme 35' sozusagen gestaucht wird und dort einen besseren Halt findet. Die Steckaufnahme 35' weitet sich von der Einsteckseite 80 her zur anderen Seite 81 hin auf, hat also beispielsweise eine konische Gestalt. Wenn nunmehr der Steckvorsprung 60 vom Werkzeug W geprägt wird, das beispielsweise eine Keilgestalt hat, nimmt sein Querschnitt entsprechend dem Querschnitt der Steckaufnahme 35' zu, so dass die beiden Bauteile 20 und 31 bezüglich der Steckachse zugfest miteinander verbunden sind.

Bei der Trägeranordnung 110 ist der Querträger 120 als Rundprofil ausgestaltet. Dies ist nur exemplarisch zu verstehen, das heißt der Querträger 120 könnte auch jedes andere Profil haben, beispielsweise wie der Querträger 20 ein im Querschnitt rechteckiges Profil, ein Polygonalprofil oder dergleichen. An dieser Stelle sei bemerkt, dass selbstverständlich auch der Querträger 20 nur exemplarisch zu verstehen ist, wobei es jedoch bei den Querträgern 20 und 120 in jedem Fall vorteilhaft ist, das sie aus einem Profilelement gebildet sind.

An seinen jeweiligen Längsenden 23 und 24 des Querträgers 120 sind Steckvorsprünge 150 ausgebildet, die von einer Umfangswand 126 des Querträgers 120 gebildet sind bzw. mit dieser Umfangswand 126 einstückig sind. Die Steckvorsprünge 150 stehen sozusagen als Zähne oder als Zahnkranz vor eine Stirnseite 128 des Querträgers 120 vor. Zwischen den einzelnen in der Art von Ringsegmenten ausgestalteten Steckvorsprüngen 150 ist jeweils ein Abstand vorhanden.

Korrespondierend ist an einem Haltebereich 138 des Seitenträgers 130, 131 eine Anordnung von mehreren Steckaufnahmen 133 vorhanden, die ebenfalls in der Art von Kreisringsegmenten ausgestaltet sind. Jedenfalls sind die Steckaufnahmen 133 zu einer formschlüssigen Aufnahme der Steckvorsprünge 150 ausgestaltet und vorgesehen. Eine Innenkontur der Steckaufnahme 133 korrespondiert mit einer Außenkontur der Steckvorsprünge 150, ist also ebenfalls ringsegmentartig.

Von dem Haltebereich 138 weg erstreckt sich ein Haltearm 137, an dem die Durchtrittsöffnungen 32 zur Befestigung an der Karosserie 101 des Kraftfahrzeugs 100 vorgesehen sind. Der Haltebereich 138 hat eine im Wesentlichen kreisförmige Kontur, passend zu der etwa kreisförmigen Außenkontur des Querträgers 120.

Die Steckaufnahmen 133 sind ebenso wie die Steckaufnahmen 33-36, 76 und 77 als Durchtrittsöffnungen ausgestaltet, das heißt sie eignen sich zum Durchtritt der Steckvorsprünge 150.

An dieser Stelle sei bemerkt, dass es beispielsweise im Falle der Steckaufnahmen 33-36 sowie der Steckaufnahmen 76 und 77 auch genügen würde, wenn diese als Sacklöcher oder Vertiefungen an der jeweiligen Wand 26 bzw. 39 ausgestaltet wären.

Die Steckaufnahmen 133 sind beispielsweise aus den Wänden 139 der Seitenträger 130, 131 ausgestanzt, ausgeschnitten oder dergleichen. Die Wände 139 sind ebenfalls plattenartig. Z.B. bestehen die Wände 139 ebenso wie die Seitenträger 130 und 131 aus Stahlblech oder einem sonstigen Metallblech, wobei selbstverständlich auch ein anderes Material, zum Beispiel Kunststoff oder dergleichen, möglich wäre.

Die Seitenträger 30, 31, 130, 131 können auch aus einem Profilmaterial bestehen, zum Beispiel aus einem Rundprofil, einem Vierkant- oder Vielkantenprofil oder dergleichen, z.B. ähnlich wie die Querträger 20 und 120.

Der Querträger 120 ist von einer Einsteckseite 80 her in die Seitenträger 130 und 131 eingesteckt, so dass seine Stirnseiten 128 an den Innenseiten 134 der Seitenträger 130 und 131 anliegen. Mithin sind also die Stirnseiten 128 an der Einsteckseite 80 an den Seitenträgern 130, 131 abgestützt.

Die Steckvorsprünge 150 stehen mit freien Endbereichen 151 vor die zu der Einsteckseite 80 entgegengesetzten freien Seite 81 vor.

Die Steckvorsprünge 150 sind im Bereich der freien Endbereichen 151 stoffschlüssig mit der Wand 139 der Seitenträger 130, 131 verbunden. Beispielsweise ist dort ein Verbindungsmaterial 83, zum Beispiel Schweißmaterial, Klebstoff oder dergleichen, vorgesehen. Bei dem Verbindungsmaterial 83 kann es sich beispielsweise um eine Schweißnaht handeln.

Aber auch eine Hartlötverbindung ist zweckmäßig. Ein Lot 84 kriecht nämlich beispielsweise an den Außenumfängen der Steckvorsprünge 150 im Bereich der freien Endbereich 151 entlang und schafft dort, das heißt also an der freien Seite 81, eine Verbindung zwischen der Wand 139 und dem jeweiligen Steckvorsprung 150. Aber auch an den Innenseiten, nämlich im Bereich der Stirnseiten 128, die an den Innenseiten 134 anliegen, kann das Lot eine feste Verbindung zwischen den Seitenträgern 130, 131 und dem Querträger 120 schaffen.

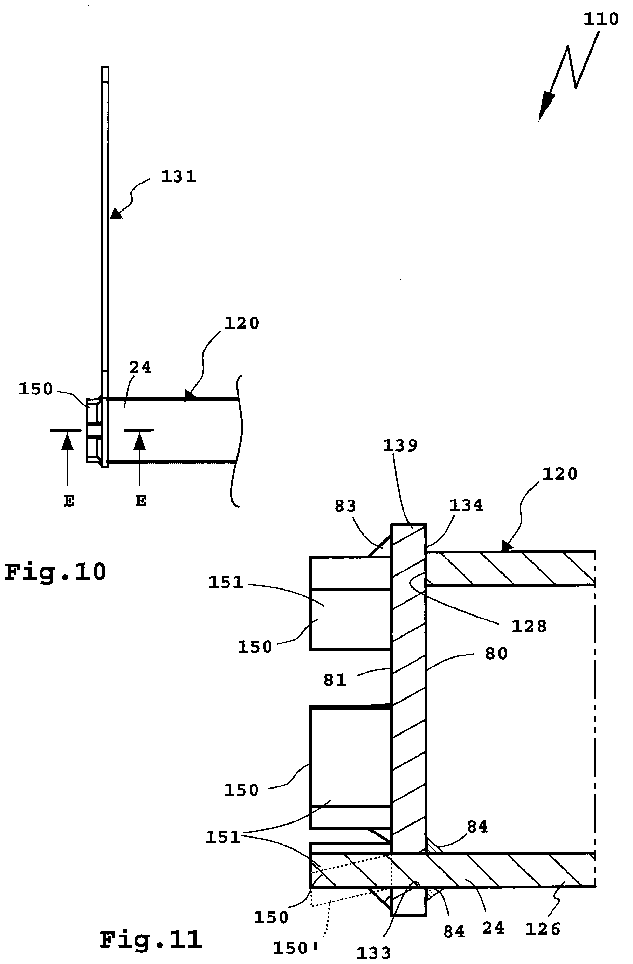

Die Steckvorsprünge 50, 51 sowie die Steckvorsprünge 150 können auch umgebogen werden, wenn sie durch die entsprechenden Durchtrittsöffnungen oder Steckaufnahmen 33-35, 133 hindurchtreten. In gestrichelten Linien ist dies in Figur 11 anhand des umgebogen dargestellten unteren Steckvorsprungs 150' dargestellt. Somit wird also nicht nur ein Formschluss quer zur Steckrichtung, sondern auch in oder gegen die Steckrichtung geschaffen, der zusätzlich noch durch die stoffschlüssige Verbindung unterstützt wird, nämlich beispielsweise durch das Lot 84 und/oder das Verbindungsmaterial 83.

Die Verbindungstechnik gemäß der Erfindung eignet sich selbstverständlich auch dazu, einzelne Abschnitte beispielsweise eines Querträgers, zum Beispiel die Abschnitte 21 und 22, miteinander zu verknüpfen. Denkbar wäre beispielsweise, dass zwischen den einzelnen Abschnitten 21 und 22 Flanschvorsprünge vorgesehen sind, an denen erfindungsgemäß Steckvorsprünge und Steckaufnahmen angeordnet sind, die ineinander eingreifen und stoffschlüssig mithilfe beispielsweise einer Schweißnaht fixiert werden. Somit ist zum einen ein Formschluss, zum andern ein Stoffschluss gegeben.

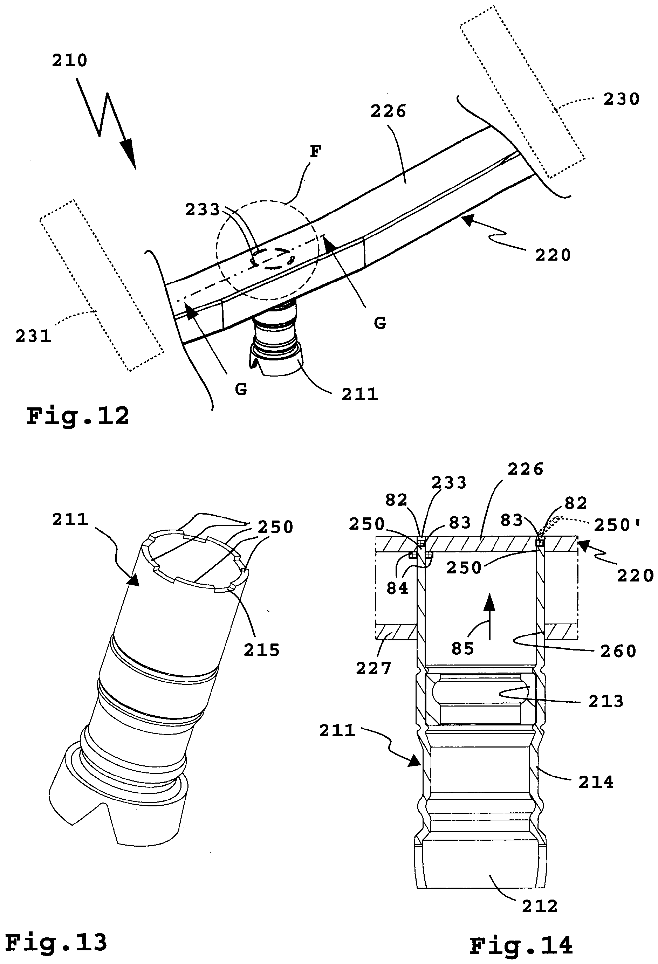

Aber auch zur Anbringung von zusätzlichem Komponenten, zum Beispiel eine Halterung 211 für den Kupplungsarm 91 einer Trägerkonstruktion eignet sich die Erfindung, was anhand der Figuren 12-14 nachfolgend noch deutlich wird.

Die Halterung 211 umfasst beispielsweise eine Hülse 214 mit einer Halteaufnahme 212, zum Beispiel einer Steckaufnahme. In die Halteaufnahme 212 kann beispielsweise das Steckende 92 des Kupplungsarms 91 eingesteckt werden. An dem Steckende 92 sind Verriegelungsmittel, zum Beispiel Kugeln 94 vorgesehen, die in an sich bekannter Weise nach radial außen durch einen Verdrängermechanismus, zum Beispiel mit einem Sperrbolzen, verdrängt werden können, so dass sie in eine korrespondierende Formschluss-Aufnahme 213, beispielsweise eine Kugelsitzrinne, im Innenraum der Halterung 211 eindringen können.

Die Halterung 211 umfasst eine Hülse 214, deren obere, freie Stirnseite 215 mehrere Steckvorsprünge 250 aufweist. Die Steckvorsprünge 250 sind ähnlich wie die Steckvorsprünge 150 in der Art von Ringsegmenten ausgestaltet, das heißt dass sie sich jeweils über einen Winkelbereich des Umfangs der ringförmigen Hülse 214 erstrecken.

Die Hülse 214 ist von unten her in den Querträger 220, der beispielsweise ansonsten ähnlich wie der Querträger 20 ausgestaltet ist, eingesteckt. Die Hülse 214 durchdringt eine Durchstecköffnung 260 an der unteren Wand 227 des Querträgers 220. Ein Innenumfang der Durchstecköffnung 260 entspricht einem Außenumfang der Hülse 214 im Kontaktbereich mit der Durchstecköffnung 260, so dass die Hülse 214 formschlüssig in der Durchstecköffnung 260 aufgenommen ist.

Die obere Stirnseite 215 der Hülse 214 liegt an der Innenseite einer oberen Wand 226 des Querträgers 220 an bzw. stützt sich dort ab. Die Zähne oder Steckvorsprünge 250 dringen in Steckaufnahmen 233 an der oberen Wand 226 ein, sind also in diese eingesteckt.

Die Steckaufnahmen 233 nehmen die Steckvorsprünge 250 formschlüssig auf. Die Steckvorsprünge 250 und die Steckaufnahmen 233 sind jeweils bogenförmig.

Die Steckvorsprünge 250 haben jeweils einen Winkelabstand zueinander. Auch die Steckaufnahmen 233 haben jeweils einen Winkelabstand zueinander.

Die Steckaufnahmen 233 nehmen die Steckvorsprünge 250 verdrehsicher auf, d.h. die in die Steckaufnahmen 233 eingesteckte Hülse 214 oder Halterung 211 ist anhand dieser Steckverbindung unverdrehbar am Querträger 220 gehalten.

Die Steckvorsprünge 250 stehen nicht vor eine Oberseite der Wand 226 vor. Mithin ist also wiederum eine Vertiefung 82 bei jedem der Steckvorsprünge 250 bzw. in jeder der Steckaufnahme 233 vorhanden.

Diese Vertiefung 82 eignet sich zur Aufnahme von Verbindungsmaterial 83, zum Beispiel Lot, einem Schweißgut oder dergleichen. Es versteht sich, dass die Steckvorsprünge 250 auch nach oben hin vor die Wand 226 vorstehen könnten und beispielsweise wie in Figur 11 dargestellt umgekantet oder umgebogen werden können, um zusätzlich entgegen der Einsteckrichtung 85 der Steckvorsprünge 250 in die Steckaufnahmen 233 einen Formschluss herzustellen. Das ist beispielhaft anhand eines Steckvorsprungs 250' angedeutet.

Auch am Beispiel der Halterung 211 soll gezeigt werden, das beispielsweise anhand von durch Hartlöten eingebrachtes Lot 84 eine zusätzliche Sicherheit geschaffen werden kann. Das Lot 84 kriecht beispielsweise an der Innenseite der Steckaufnahme 233 entlang und verbindet auch die innere und äußere Fläche der Hülse 214 mit der Innenseite der oberen Wand 226.

## Patentansprüche

1. Trägeranordnung für eine Anhängekupplung (90) oder einen Lastenträger, als Bauteile umfassend einen Querträger und mindestens eine an dem Querträger (20; 120; 220) angeordnete Halterung (11, 13; 211) für eine Anhängekupplung (90) oder für ein Kupplungsteil eines Lastenträgers und gegebenenfalls mit dem Querträger (20; 120; 220) verbundene Seitenträger (30; 130; 230; 31; 131; 231) zur Montage an einem Heck einer Karosserie eines Fahrzeugs, wobei mindestens zwei der Bauteile der Trägeranordnung (10; 110; 210) und/oder mindestens zwei von deren Bauteilkomponenten durch eine Steckverbindung miteinander verbunden sind, wobei ein vor das eine Bauteil oder die eine Bauteilkomponente vorstehender Steckvorsprung (50, 51, 60, 61; 150; 250) in eine Steckaufnahme (33-36; 133; 233) des anderen Bauteils oder der anderen Bauteilkomponente eingreift und der mindestens eine Steckvorsprung mit dem anderen Bauteil oder der anderen Bauteilkomponente anhand einer stoffschlüssigen Verbindung verbunden ist, **dadurch gekennzeichnet, dass** der mindestens eine Steckvorsprung (50, 51, 60, 61; 150; 250) von einer Einsteckseite (80) her in die Steckaufnahme (33-36; 133; 233) eingesteckt und hinter die der Einsteckseite (80) entgegengesetzte freie Seite (81) des Bauteils zurück steht, so dass in der Steckaufnahme (33-36; 133; 233) eine Vertiefung (82) gebildet ist, und dass die Vertiefung (82) mit dem den mindestens einen Steckvorsprung (50, 51, 60, 61; 150; 250) mit der Steckaufnahme (33-36; 133; 233) stoffschlüssig verbindenden Verbindungsmaterial (83) zumindest teilweise verfüllt ist.

2. Trägeranordnung nach Anspruch 1, **dadurch gekennzeichnet, dass** der mindestens eine Steckvorsprung (50, 51, 60, 61; 150; 250) in die Steckaufnahme (33-36; 133; 233) des zweiten Bauteils formschlüssig eingreift.

3. Trägeranordnung nach Anspruch 1 oder 2, **dadurch gekennzeichnet, dass** die Steckaufnahme (33-36; 133; 233) eine Durchstecköffnung umfasst, durch die mindestens ein Steckvorsprung (50, 51, 60, 61; 150; 250) durchgesteckt ist.

4. Trägeranordnung nach einem der vorhergehenden Ansprüche, **dadurch gekennzeichnet, dass** ein vor die Steckaufnahme (33-36; 133; 233), insbesondere an der der Einsteckseite (80) entgegengesetzten Seite (81) des Bauteils, vorstehender Abschnitt (150'; 250') des mindestens einen Steckvorsprungs (50, 51, 60, 61; 150; 250) in der Art einer Biegelasche quer zur Längserstreckungsrichtung der Steckaufnahme (33-36; 133; 233) umgebogen ist.

5. Trägeranordnung nach einem der vorhergehenden Ansprüche, **dadurch gekennzeichnet, dass** ein außerhalb der Steckaufnahme (33-36; 133; 233) befindlicher Abschnitt des mindestens einen Steckvorsprungs (50, 51, 60, 61; 150; 250) mit dem anderen Bauteil stoffschlüssig verbunden ist.

6. Trägeranordnung nach einem der vorhergehenden Ansprüche, **dadurch gekennzeichnet, dass** der mindestens eine Steckvorsprung (50, 51, 60, 61; 150; 250) und/oder die mindestens eine Steckaufnahme (33-36; 133; 233) quer zur Einsteckrichtung (85) oder Einsteckachse einen bogenförmigen und/oder winkeligen Verlauf hat und/oder dass der mindestens eine Steckvorsprung (50, 51, 60, 61; 150; 250) an mindestens einer Innenfläche der Steckaufnahme (33-36; 133; 233), insbesondere an sämtlichen Innenflächen der Steckaufnahme (33-36; 133; 233), anliegt und/oder dass der mindestens eine Steckvorsprung (50, 51, 60, 61; 150; 250) einen Bestandteil einer Gruppe von Steckvorsprüngen (50, 51, 60, 61; 150; 250) bildet, die vor eine Stirnseite (74, 75; 215) des einen Bauteils vorsteht und in Steckaufnahmen (33-36; 133; 233) am anderen Bauteil eingreift.

7. Trägeranordnung nach einem der vorhergehenden Ansprüche, **dadurch gekennzeichnet, dass** das den mindestens einen Steckvorsprung (50, 51, 60, 61; 150; 250) aufweisende Bauteil einen mit dem mindestens einen Steckvorsprung (50, 51, 60, 61; 150; 250) integralen und einstückigen Grundkörper aufweist.

8. Trägeranordnung nach einem der vorhergehenden Ansprüche, **dadurch gekennzeichnet, dass** sich das den mindestens einen Steckvorsprung (50, 51, 60, 61; 150; 250) aufweisende Bauteil mit einer sich neben dem Steckvorsprung (50, 51, 60, 61; 150; 250) erstreckenden Fläche, insbesondere einer Stirnwand, an dem anderen Bauteil abstützt.

9. Trägeranordnung nach einem der vorhergehenden Ansprüche, **dadurch gekennzeichnet, dass** mindestens eines der Bauteile einen Profilkörper, insbesondere mit einem rechteckigen oder runden Querschnitt, bildet oder aufweist.

10. Trägeranordnung nach einem der vorhergehenden Ansprüche, **dadurch gekennzeichnet, dass** der mindestens eine Steckvorsprung (50, 51, 60, 61; 150; 250) mit einer Umfangswand des Profilkörpers integral ist und in dessen Längserstreckungsrichtung von dem Profilkörper, insbesondere stirnseitig und/oder insbesondere geradlinig und ohne einen Winkel, absteht.

11. Trägeranordnung nach einem der vorhergehenden Ansprüche, **dadurch gekennzeichnet, dass** sie einen die miteinander verbundenen, insbesondere sich in einem Eckbereich zwischen den verbundenen Bauteilen diagonal erstreckenden, Verbindungskörper (70) aufweist, an dem die Steckaufnahme oder der mindestens eine Steckvorsprung (72, 73) angeordnet sind, und/oder dass die stoffschlüssige Verbindung eine Verschweißung und/oder eine Verklebung und/oder eine Lötverbindung umfasst.

12. Trägeranordnung nach einem der vorhergehenden Ansprüche, **dadurch gekennzeichnet, dass** das eine Bauteil, insbesondere die Halterung (211) für eine Anhängekupplung (90) oder das Kupplungsteil des Lastenträgers, durch eine Durchstecköffnung (260) an einer ersten Wand (227) des anderen Bauteils, insbesondere des Querträgers (20; 120; 220), durchgesteckt ist und anhand des mindestens einen Steckvorsprungs (50, 51, 60, 61; 150; 250) und der Steckaufnahme (33-36; 133; 233) mit einer der ersten Wand (227) gegenüberliegenden zweiten Wand (226) des anderen Bauteils verbunden ist, wobei sich zwischen den Wänden zweckmäßigerweise ein Hohlraum erstreckt und/oder vorteilhaft das eine Bauteil formschlüssig in der Durchstecköffnung (260) des anderen Bauteils aufgenommen ist.

13. Trägeranordnung nach einem der vorhergehenden Ansprüche, **dadurch gekennzeichnet, dass** der mindestens eine Steckvorsprung (50, 51, 60, 61; 150; 250) in der Steckaufnahme (33-36; 133; 233) durch eine Umformung, insbesondere eine Stauchung oder Prägung, bearbeitet, insbesondere in seinem Querschnitt gegenüber dem noch nicht umgeformten Zustand vergrößert, ist, wobei vorzugsweise vorgesehen ist, dass die Steckaufnahme (33-36; 133; 233) an der Einsteckseite (80) einen kleineren Querschnitt aufweist als an ihrer der Einsteckseite (80) entgegengesetzten Seite.

## Claims

1. Support assembly for a trailer coupling (90) or a load carrier, as components including a cross-member and at least one holder (11, 13; 211) fitted to the cross-member (20; 120; 210) for a trailer coupling or for a coupling part of a load carrier and where applicable with side members (30; 130; 230; 31; 131; 231) connected to the cross-member (20; 120; 220) for fitting to a rear of a vehicle body, wherein at least two of the components of the support assembly (10; 110; 210) and/or at least two of its component parts are connected to one another by a plug connection, wherein a plug-in projection (50, 51, 60, 61; 150; 250) in front of the one component or the component part engages in a plug-in socket (33-36; 133; 233) of the other component or the other component parts, and the plug-in projection or projections is or are joined to the other component or the other component parts with the aid of a material bonding connection, **characterised in that** the plug-in projection or projections (50, 51, 60, 61; 150; 250) is or are inserted into the plug-in socket (33-36; 133; 233) from an insertion side (80) and behind which the free side (81) of the component opposite the insertion side (80) is set back, so that a recess (82) is formed in the plug-in socket (33-36; 133; 233), and that the recess (82) is at least partly filled by the connecting material (83) creating the material bond between the plug-in projection or projections (50, 51, 60, 61; 150; 250) and the plug-in socket (33-36; 133; 233).

2. Support assembly according to claim 1, **characterised in that** the plug-in projection or projections (50, 51, 60, 61; 150; 250) engages or engage positively in the plug-in socket (33-36; 133; 233) of the second component.

3. Support assembly according to claim 1 or 2, **characterised in that** the plug-in socket (33-36; 133; 233) comprises a push-through hole, through which the plug-in projection or projections (50, 51, 60, 61; 150; 250) is or are pushed.

4. Support assembly according to any of the preceding claims, **characterised in that** a section (150'; 250') of the plug-in projection or projections (50, 51, 60, 61; 150; 250) protruding from the plug-in socket (33-36; 133; 233), in particular on the side (81) of the component opposite the insertion side (80), is bent in the manner of a bending lug transversely to the direction of longitudinal extent of the plug-in socket (33-36; 133; 233).

5. Support assembly according to any of the preceding claims, **characterised in that** a section of the plug-in projection or projections (50, 51, 60, 61; 150; 250) located outside the plug-in socket (33-36; 133; 233) is joined by material bonding to the other component.

6. Support assembly according to any of the preceding claims, **characterised in that** the plug-in projection or projections (50, 51, 60, 61; 150; 250) and/or the plug-in socket or sockets (33-36; 133; 233) has or have a curved and/or angled course transverse to the direction of insertion (85) or insertion axis, and/or that the plug-in projection or projections (50, 51, 60, 61; 150; 250) abut at least one inner surface of the plug-in socket (33-36; 133; 233), in particular all inner surfaces of the plug-in socket (33-36; 133; 233), and/or that the plug-in projection or projections (50, 51, 60, 61; 150; 250) forms or form part of a group of plug-in projections (50, 51, 60, 61; 150; 250) which protrude from an end face (74, 75; 215) of the one component and engage in plug-in sockets (33-36; 133; 233) on the other component.

7. Support assembly according to any of the preceding claims, **characterised in that** the component with the plug-in projection or projections (50, 51, 60, 61; 150; 250) has a base body which is integral and forms a single piece with the plug-in projection or projections (50, 51,60,61; 150; 250).

8. Support assembly according to any of the preceding claims, **characterised in that** the component with the plug-in projection or projections (50, 51, 60, 61; 150; 250) rests on the other component with a surface, in particular an end wall, extending next to the plug-in projection (50, 51, 60, 61; 150; 250).

9. Support assembly according to any of the preceding claims, **characterised in that** at least one of the components forms or has a profile body, in particular with a rectangular or circular cross-section.

10. Support assembly according to any of the preceding claims, **characterised in that** the plug-in projection or projections (50, 51, 60, 61; 150; 250) is or are integral with a peripheral wall of the profile body and protrudes or protrude in its direction of longitudinal extent from the profile body, in particular at the end and/or in particular in a straight line and with no angle.

11. Support assembly according to any of the preceding claims, **characterised in that** it has a connecting body (70) extending in particular diagonally in a corner zone between the connected components, on which the plug-in socket or the plug-in projection or projections (72, 73) are located, and/or that the material bonding connection comprises welding and/or gluing and/or a solder connection.

12. Support assembly according to any of the preceding claims, **characterised in that** the one component, in particular the holder (211) for a trailer coupling (90) or the coupling part of the load carrier, is penetrated by a push-through hole (260) on a first wall (227) of the other component, in particular the cross-member (20; 120; 220), and with the aid of the plug-in projection or projections (50, 51, 60, 61; 150; 250) and the plug-in socket (33-36; 133; 233) is connected to a second wall (226) of the other component lying opposite the first wall (227), wherein a hollow space expediently extends between the walls, and/or advantageously the one component is held positively in the push-through hole (260) of the other component.

13. Support assembly according to any of the preceding claims, **characterised in that** the plug-in projection or projections (50, 51, 60, 61; 150; 250) is machined in the plug-in socket (33-36; 133; 233) by forming, in particular compression deformation or stamping, in particular being enlarged in its cross-section as compared with its as yet unformed state, wherein it is advantageously provided that the plug-in socket (33-36; 133; 233) has on the insertion side (80) a smaller cross-section than on its side opposite the insertion side (80).

## Revendications

1. Ensemble de support pour un attelage de remorque (90) ou un support de charges, comprenant en tant qu'éléments une traverse et au moins une fixation (11, 13 ; 211) disposée au niveau de la traverse (20 ; 120 ; 220) pour un attelage de remorque (90) ou pour une pièce d'attelage d'un support de charges et éventuellement des supports latéraux (30 ; 130 ; 230 ; 31 ; 131 ; 231) reliés à la traverse (20 ; 120 ; 220) servant au montage au niveau d'une partie arrière d'une carrosserie d'un véhicule, dans lequel au moins deux des éléments de l'ensemble de support (10 ; 110 ; 210) et/ou au moins deux de leurs composants d'élément sont reliés les uns aux autres par une connexion enfichable, dans lequel une partie faisant saillie enfichable (50, 51, 60, 61 ; 150 ; 250) faisant saillie d'un élément ou d'un composant d'élément vient en prise avec un logement enfichable (33 - 36 ; 133 ; 233) de l'autre élément ou de l'autre composant d'élément et l'au moins une partie faisant saillie enfichable est reliée à l'autre élément ou à l'autre composant d'élément à l'aide d'une connexion par liaison de matière, **caractérisé en ce que** l'au moins une partie faisant saillie enfichable (50, 51, 60, 61 ; 150 ; 250) est enfichée depuis un côté d'enfichage (80) dans le logement enfichable (33 - 36 ; 133 ; 233) et est en retrait derrière le côté (81) libre, opposé au côté d'enfichage (80), de l'élément, de sorte qu'un renfoncement (82) est formé dans le logement enfichable (33 - 36 ; 133 ; 233), et que le renfoncement (82) est rempli au moins en partie du matériau de connexion (83) connectant par liaison de matière l'au moins une partie faisant saillie enfichable (50, 51, 60, 61 ; 150; 250) au logement enfichable (33 - 36 ; 133 ; 233).

2. Ensemble de support selon la revendication 1, **caractérisé en ce que** l'au moins une partie faisant saillie d'enfichage (50, 51, 60, 61 ; 150 ; 250) vient en prise par complémentarité de forme avec le logement enfichable (33 - 36 ; 133 ; 233) du deuxième élément.

3. Ensemble de support selon la revendication 1 ou 2, **caractérisé en ce que** le logement enfichable (33 - 36 ; 133 ; 233) comprend une ouverture de passage par enfichage, à travers laquelle au moins une partie faisant saillie enfichable (50, 51, 60, 61 ; 150 ; 250) est passée.

4. Ensemble de support selon l'une quelconque des revendications précédentes, **caractérisé en ce qu'**une section (150' ; 250'), faisant saillie du logement d'enfichage (33 - 36 ; 133 ; 233), en particulier au niveau du côté (81) opposé au côté d'enfichage (80), de l'au moins une partie faisant saillie d'enfichage (50, 51, 60, 61 ; 150 ; 250) est repliée à la manière d'une bride flexible de manière transversale par rapport à la direction d'extension longitudinale du logement d'enfichage (33 - 36 ; 133 ; 233).

5. Ensemble de support selon l'une quelconque des revendications précédentes, **caractérisé en ce qu'**une section se trouvant à l'extérieur du logement d'enfichage (33 - 36 ; 133 ; 233) de l'au moins une partie faisant saillie d'enfichage (50, 51, 60, 61 ; 150 ; 250) est reliée par liaison de matière à l'autre élément.

6. Ensemble de support selon l'une quelconque des revendications précédentes, **caractérisé en ce que** l'au moins une partie faisant saillie d'enfichage (50, 51, 60, 61 ; 150; 250) et/ou l'au moins un logement d'enfichage (33 - 36; 133; 233) présentent, de manière transversale par rapport à la direction d'enfichage (85) ou de l'axe d'enfichage, un profil en forme d'arc et/ou angulaire, et/ou que l'au moins une partie faisant saillie d'enfichage (50, 51, 60, 61 ; 150; 250) repose au niveau d'au moins une surface intérieure du logement d'enfichage (33 - 36 ; 133 ; 233), en particulier au niveau de toutes les surfaces intérieures du logement d'enfichage (33 - 36 ; 133 ; 233), et/ou que l'au moins une partie faisant saillie d'enfichage (50, 51, 60, 61 ; 150 ; 250) forme un élément constitutif d'un groupe de parties faisant saillie d'enfichage (50, 51, 60, 61 ; 150 ; 250), qui fait saillie d'un côté frontal (74, 75; 215) d'un élément et vient en prise avec des logements d'enfichage (33 - 36 ; 133 ; 233) au niveau de l'autre élément.

7. Ensemble de support selon l'une quelconque des revendications précédentes, **caractérisé en ce que** l'élément présentant au moins une partie faisant saillie d'enfichage (50, 51, 60, 61 ; 150; 250) présente un corps de base intégral et d'un seul tenant avec l'au moins une partie faisant saillie d'enfichage (50, 51, 60, 61 ; 150 ; 250).

8. Ensemble de support selon l'une quelconque des revendications précédentes, **caractérisé en ce que** l'élément présentant l'au moins une partie faisant saillie d'enfichage (50, 51, 60, 61 ; 150 ; 250) prend appui au niveau de l'autre élément par une surface s'étendant à côté de la partie faisant saillie d'enfichage (50, 51, 60, 61 ; 150 ; 250), en particulier d'une paroi frontale.

9. Ensemble de support selon l'une quelconque des revendications précédentes, **caractérisé en ce qu'**au moins un des éléments forme ou présente un corps profilé, en particulier pourvu d'une section transversale rectangulaire ou ronde.

10. Ensemble de support selon l'une quelconque des revendications précédentes, **caractérisé en ce que** l'au moins une partie faisant saillie d'enfichage (50, 51, 60, 61 ; 150; 250) est intégrale avec une paroi périphérique du corps profilé et dépasse, dans sa direction d'extension longitudinale, du corps profilé, en particulier du côté frontal et/ou en particulier de manière rectiligne et sans un angle.

11. Ensemble de support selon l'une quelconque des revendications précédentes, **caractérisé en ce qu'**il présente un corps de connexion (70) s'étendant de manière diagonale en particulier dans une zone d'angle entre les composants reliés, au niveau duquel le logement d'enfichage ou l'au moins une partie faisant saillie d'enfichage (72, 73) sont disposés, et/ou que la connexion par liaison de matière comprend un soudage et/ou un collage et/ou une connexion par brasage.

12. Ensemble de support selon l'une quelconque des revendications précédentes, **caractérisé en ce qu'**un élément, en particulier la fixation (211) pour un attelage de remorque (90) ou la pièce d'attelage du support de charges, est enfiché au travers d'une ouverture de passage par enfichage (260) au niveau d'une première paroi (227) de l'autre élément, en particulier de la traverse (20 ; 120 ; 220) et est relié, à l'aide d'au moins une partie faisant saillie d'enfichage (50, 51, 60, 61 ; 150 ; 250) et du logement d'enfichage (33 - 36 ; 133 ; 233) à une deuxième paroi (226), faisant face à la première paroi (227), de l'autre élément, dans lequel une cavité s'étend de manière appropriée entre les parois et/ou un élément est logé de manière avantageuse par complémentarité de forme dans l'ouverture de passage par enfichage (260) de l'autre élément.

13. Ensemble de support selon l'une quelconque des revendications précédentes, **caractérisé en ce que** l'au moins une partie faisant saillie d'enfichage (50, 51, 60, 61 ; 150; 250) est usinée dans le logement d'enfichage (33 - 36 ; 133 ; 233) par une mise en forme, en particulier par écrasement ou gaufrage, en particulier est agrandie dans sa section transversale par rapport à l'état encore non mis en forme, dans lequel il est prévu de préférence que le logement d'enfichage (33 - 36 ; 133 ; 233) présente au niveau du côté d'enfichage (80) une section transversale plus petite qu'au niveau de son côté opposé au côté d'enfichage (80).
